(19) Europäisches Patentamt
European Patent Office
Office européen des brevets

(11) EP 4 404 321 B1

(12) EUROPEAN PATENT SPECIFICATION

(45) Date of publication and mention of the grant of the patent:
**04.03.2026 Bulletin 2026/10**

(21) Application number: **22893100.2**

(22) Date of filing: **02.11.2022**

(51) International Patent Classification (IPC):
***H01M 10/0525*** *(2010.01)* ***H01M 10/0567*** *(2010.01)*
***H01M 10/0569*** *(2010.01)* ***H01M 4/525*** *(2010.01)*
***H01M 4/505*** *(2010.01)* ***H01M 4/38*** *(2006.01)*
***H01M 4/48*** *(2010.01)*

(52) Cooperative Patent Classification (CPC):
**H01M 4/505; H01M 4/386; H01M 4/483; H01M 4/525; H01M 10/0525; H01M 10/0567; H01M 10/0569;** H01M 2300/0025; Y02E 60/10

(86) International application number:
**PCT/KR2022/017011**

(87) International publication number:
**WO 2023/085678 (19.05.2023 Gazette 2023/20)**

(54) **LITHIUM SECONDARY BATTERY**
LITHIUMSEKUNDÄRBATTERIE
BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.11.2021 KR 20210154694**

(43) Date of publication of application:
**24.07.2024 Bulletin 2024/30**

(73) Proprietors:
- **LG Energy Solution, Ltd.**
  **Seoul 07335 (KR)**
- **Daegu Gyeongbuk Institute Of Science and Technology**
  **Daegu 42988 (KR)**

(72) Inventors:
- **OH, Jeong Woo**
  **Daejeon 34122 (KR)**
- **LEE, Chul Haeng**
  **Daejeon 34122 (KR)**
- **LEE, Ho Chun**
  **Daegu 42783 (KR)**
- **PARK, Jong Won**
  **Dalseong-gun Daegu 43014 (KR)**
- **PARK, Doh Hee**
  **Cheongju-si Chungcheongbuk-do 28668 (KR)**

(74) Representative: **Hoffmann Eitle**
**Patent- und Rechtsanwälte PartmbB**
**Arabellastraße 30**
**81925 München (DE)**

(56) References cited:
**EP-A1- 2 999 033**
**WO-A1-2021/034141**
**KR-A- 20150 022 657**
**KR-A- 20160 032 632**
**KR-A- 20200 089 623**
**KR-A- 20210 023 756**
**US-A1- 2021 043 971**

Remarks:
The file contains technical information submitted after the application was filed and not included in this specification

EP 4 404 321 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This application claims priority from Korean Patent Application No. 10-2021-0154694, filed on November 11, 2021.

The present invention relates to a lithium secondary battery including an electrolyte solution containing a specific additive combination and a high-nickel positive electrode material.

## BACKGROUND ART

A lithium secondary battery is generally prepared by a method in which, after an electrode assembly is formed by interposing a separator between a positive electrode including a positive electrode active material formed of a transition metal oxide containing lithium, and a negative electrode including a negative electrode active material capable of storing lithium ions, the electrode assembly is inserted into a battery case, a non-aqueous electrolyte solution, which becomes a medium for transferring the lithium ions, is injected thereinto, and the battery case is then sealed.

Lithium secondary batteries can be miniaturized and have high energy density and operating voltage, and thus have been applied to various fields such as mobile devices, electronic products, and electric vehicles. In particular, a low-cost high-energy positive electrode material is essential to be applied to medium and large sized devices such as an electric vehicle and a power storage system, and $LiCoO_2$ having a high operating voltage and excellent capacity characteristics has a disadvantage that the thermal stability thereof is not good and the price is high.

Therefore, nickel cobalt manganese-based lithium composite transition metal oxide (hereinafter, simply referred to as "NCM-based lithium composite transition metal oxide") is mainly used as a positive electrode material capable of replacing $LiCoO_2$, and the NCM-based lithium composite transition metal oxide has an advantage of relatively low price and high reversible capacity. However, when a nickel content is increased in the NCM-based lithium composite transition metal oxide for achieving high capacity, the surface stability deteriorates and the decomposition reaction of the electrolyte is intensified, thereby increasing the resistance of the battery and deteriorating life characteristics.

Therefore, there is a need to develop a method capable of improving these limitations.

(Patent Document 1) WO 2021/034141 A1 discloses a non-aqueous electrolyte for a lithium secondary battery and a lithium secondary battery comprising the non-aqueous electrolyte, wherein the non-aqueous electrolyte comprises a lithium salt, organic solvent, a first additive, and lithium difluorophosphate as a second additive.

(Patent Document 2) EP 2 999 033 A1 discloses a rechargeable lithium battery including a negative electrode including a negative active material including a Si-based material, a positive electrode, and an electrolyte including a lithium salt, an organic solvent, and an additive including lithium triflate and fluoroethylene carbonate.

## DISCLOSURE OF THE INVENTION

## TECHNICAL PROBLEM

An aspect of the present invention improves high-temperature life characteristics of a lithium secondary battery including an NCM-based positive electrode active material by introducing a non-aqueous electrolyte solution containing a combination of two specific additive.

Another aspect of the present invention provides a lithium secondary battery having improved quick charging performance by effectively solving the problem of SEI film decomposition of the lithium secondary battery including a silicon-based negative electrode material through the non-aqueous electrolyte solution.

## TECHNICAL SOLUTION

According to an aspect of the present invention, there is provided a lithium secondary battery including:

a non-aqueous electrolyte solution containing a lithium salt, an organic solvent, a first additive represented by Formula 1 below, and a second additive represented by Formula 2-1 below;
a positive electrode including a positive electrode active material containing a lithium composite transition metal oxide including nickel, cobalt, and manganese;
a negative electrode including a negative electrode active material; and
a separator interposed between the positive electrode and the negative electrode,
wherein a content of the first additive is 0.5 wt% to 3 wt% based on a total weight of the non-aqueous electrolyte solution, and

the lithium composite transition metal oxide contains 70 mol% or more of nickel based on a total number of moles of transition metals:

[Formula 1] $LiSO_3R$

In Formula 1 above,
R is $C_nF_{2n+1}$, and n is an integer of 1 to 5, and
[Formula 2-1] has the following structure:

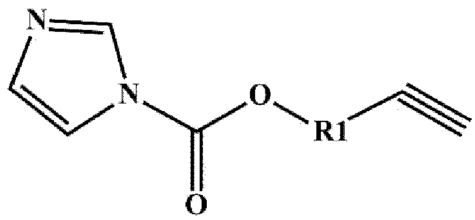

wherein, in Formula 2-1,
R1 is an alkylene group having 1 to 3 carbon atoms.

## ADVANTAGEOUS EFFECTS

The lithium secondary battery according to the present invention can improve life characteristics and quick charging performance of the lithium secondary battery including an NCM-based positive electrode active material and/or a Si-based negative electrode active material by including a non-aqueous electrolyte containing a specific additive combination.

## BEST MODE FOR CARRYING OUT THE INVENTION

Hereinafter, the present invention will be described in more detail.

In general, an anion included in a lithium salt such as $LiPF_6$, which is widely used in an electrolyte solution for a lithium secondary battery, forms decomposition products such as hydrogen fluoride (HF) and $PF_5$ by thermal decomposition or moisture. These decomposition products have acidic properties and deteriorate the film or electrode surface in the battery.

Transition metals in the positive electrode are easily eluted into the electrolyte solution due to decomposition products of the electrolyte solution, structural changes of the positive electrode due to repeated charging and discharging, or the like, and the eluted transition metals are re-deposited on the positive electrode to increase the resistance of the positive electrode. In addition, when the eluted transition metals move to the negative electrode through the electrolyte solution, the eluted transition metals are electrodeposited on the negative electrode, causing destruction of a solid electrolyte interphase (SEI) film and additional electrolyte solution decomposition reaction, thereby causing limitations such as consumption of lithium ions and increase of resistance.

In addition, when the battery is initially activated, a protective film is formed on each of the positive electrode and the negative electrode by a reaction of the electrolyte solution, and when the film becomes unstable due to the above-described reason, additional electrolyte decomposition occurs during charging and discharging or high-temperature exposure, thereby promoting degradation of the battery and generating gas.

In particular, in the case of a battery including a positive electrode active material having a high nickel content, the initial capacity characteristics may be improved, but when charging and discharging are repeated, the amount of lithium by-products and gas generated may be increased due to side reactions, and the decomposition reaction of the electrolyte solution may be intensified.

In order to solve such a limitation, the present inventors have found that a first additive represented by Formula 1 below and a second additive represented by Formula 2-1 below are included in a non-aqueous electrolyte solution, and since this has an effect of forming an organic/inorganic composite SEI film on the electrode, the film is maintained in a more stable form, thereby preventing the decomposition reaction of the electrolyte solution from being intensified.

Hereinafter, each component constituting the present invention will be described in more detail.

## Non-aqueous Electrolyte Solution

The lithium secondary battery according to the present invention includes a non-aqueous electrolyte solution

containing a lithium salt, an organic solvent, a first additive represented by Formula 1 below, and a second additive represented by Formula 2-1 below.

Hereinafter, each component of the non-aqueous electrolyte solution will be described in detail.

### (1) First Additive and Second Additive

The non-aqueous electrolyte solution of the present invention contains a first additive represented by Formula 1 below:

[Formula 1] $LiSO_3R$

In Formula 1 above,
R is $C_nF_{2n+1}$, wherein n may be any one integer of 1 to 5, preferably, 1 or 4. That is, the first additive may be $LiSO_3CF_3$ or $LiSO_3C_4F_9$.

The first additive contains a lithium ion, $SO_3$, and $C_nF_{2n+1}$ in the structure thereof, and is thus stable and has an effect of forming an SEI film favorable for transferring lithium ions. Specifically, $SO_3$ has a low binding energy with a lithium ion, so that the lithium ion may be easily decoupled, and $C_nF_{2n+1}$ contributes to forming a film of LiF component.

The content of the first additive is 0.5 wt% to 3 wt% based on the total weight of the non-aqueous electrolyte solution.

In addition, the non-aqueous electrolyte solution of the present invention contains a second additive represented by Formula 2-1 below:

[Formula 2-1]

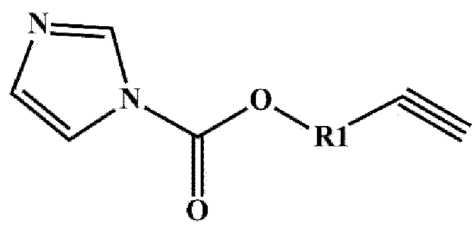

In Formula 2-1 above,
R1 is an alkylene group having 1 to 3 carbon atoms.

Since the second additive represented by Formula 2-1 above contains a propargyl functional group, an SEI film having high passivation ability is formed on the surface of the negative electrode while the functional group is reduction-decomposed, and thus, high-temperature durability of the negative electrode itself may not only be improved, but electrodeposition of transition metals on the surface of the negative electrode may also be prevented. Also, the second additive may function to make it difficult to dissolve impurities by being adsorbed on the surface of the metallic impurities included in the positive electrode due to the propargyl group, and, accordingly, an internal short circuit, which may occur by precipitation of the dissolved metal ions on the negative electrode, may be suppressed. In addition, the generation of HF in combination with $PF_5$, which is a decomposition product of the electrolyte solution, is suppressed, so that it is possible to prevent the destruction of a cathode electrolyte interphase (CEI) film formed on the surface of the positive electrode due to the first additive and suppress the additional decomposition of the electrolyte solution.

That is, if the non-aqueous electrolyte solution of the present invention is used, a film of LiF and $LiSO_3F$ components based on an inorganic material may be formed due to the first additive, and simultaneously, a film of stable organic material components capable of entirely covering the surface of the negative electrode active material may be formed due to the propargyl functional group in the second additive. In particular, the phenomenon of the formation of an unstable SEI film is intensified when a silicon-based negative electrode material is used. When the electrolyte solution of the present invention is applied, a more stable organic/inorganic composite film is formed, and thus it is possible to suppress the decomposition reaction of the electrolyte solution which is intensified when a positive electrode material having a high nickel content is used, so that it is also possible to effectively prevent the degradation of the negative electrode.

In an embodiment of the present invention, the second additive may be represented by Formula 2A below:

[Formula 2A]

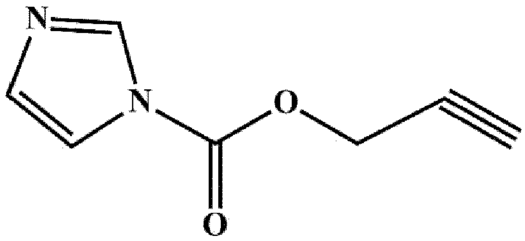

In an embodiment of the present invention, the content of the second additive may be 0.01 wt% to 2 wt%, preferably 0.05 wt% to 1 wt%, and more preferably 0.1 wt% to 0.5 wt% based on the total weight of the non-aqueous electrolyte solution. It is preferable that the content of the second additive is 2 wt% or less in terms of lowering the initial resistance.

(2) **Third Additive and Fourth Additive**

In an embodiment of the present invention, the non-aqueous electrolyte solution may further include at least one third additive selected from among vinylene carbonate (VC) and vinyl ethylene carbonate (VEC). In this case, when the second additive is reduction-decomposed in the negative electrode, propargyl radicals attack the VC or VEC double bond, and thus a polymerization reaction is easily generated, thereby more quickly and effectively covering the surface of the active material when the organic material film is formed on the negative electrode.

In an embodiment of the present invention, the content of the third additive may be 0.01 wt% to 3 wt%, preferably 0.05 wt% to 2 wt%, and more preferably 0.1 wt% to 1 wt% based on the total weight of the non-aqueous electrolyte solution. It is preferable that the content of the second additive is 3 wt% or less in terms of lowering the initial resistance.

In addition, the non-aqueous electrolyte solution of the present invention may further include the following additives as a fourth additive, as necessary, in order to prevent the electrolyte solution from being decomposed in a high-voltage environment to cause collapse of an electrode, or further improve low-temperature high-rate discharge characteristics, high-temperature stability, overcharge protection, and a battery swelling suppression effect at high temperatures.

The fourth additive may be at least one selected from among a halogen-substituted carbonate-based compound, a sultone-based compound, a sulfate-based compound, a phosphate-based or phosphite-based compound, a nitrile-based compound, an amine-based compound, a silane-based compound, a benzene-based compound, and a lithium salt-based compound.

The halogen-substituted carbonate-based compound may be fluoroethylene carbonate (FEC).

The sultone-based compound is a material capable of forming a stable solid electrolyte interphase (SEI) on a surface of a negative electrode by a reduction reaction, wherein the sultone-based compound may be at least one compound selected from 1,3-propane sultone (PS), 1,4-butane sultone, ethane sultone, 1,3-propene sultone (PRS), 1,4-butene sultone, and 1-methyl-1,3-propene sultone, and may specifically be 1,3-propane sultone (PS).

The sulfate-based compound is a material capable of forming a stable SEI film that does not crack even during high-temperature storage by being electrically decomposed on the surface of the negative electrode, wherein the sulfate-based compound may be at least one selected from among ethylene sulfate (Esa), trimethylene sulfate (TMS), and methyl trimethylene sulfate (MTMS).

The phosphate-based compound or the phosphite-based compound may be at least one selected from among lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The nitrile-based compound may be at least one selected from among succinonitrile (SN), adiponitrile (ADN), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, ethylene glycol bis(2-cyanoethyl)ether (ASA3), 1,3,6-hexanetricarbonitrile (HTCN), 1,4-dicyano-2-butene (DCB), and 1,2,3-tris(2-cyanoethyl)propane (TCEP).

The amine-based compound may be at least one selected from triethanolamine and ethylenediamine, and the silane-based compound may be tetravinylsilane.

The benzene-based compound may be at least one selected from monofluorobenzene, difluorobenzene, trifluorobenzene, and tetrafluorobenzene.

The lithium salt-based compound is a compound different from the lithium salt included in the non-aqueous electrolyte solution, and may be at least one compound selected from among difluoro phosphate (LiDFP; $LiPO_2F_2$), lithium

bisoxalatoborate (LiBOB; $LiB(C_2O_4)_2$), lithium tetrafluoroborate ($LiBF_4$), lithium tetraphenylborate, and lithium difluoro(bisoxalato)phosphate (LiDFOP).

Meanwhile, the content of the fourth additive may be 0.1 wt% to 5 wt% based on the total weight of the non-aqueous electrolyte solution. When the additive content is within the above range, there is an effect of suppressing side reactions through the formation of the films on the positive electrode and the negative electrode.

**(3) Organic Solvent**

The non-aqueous electrolyte solution of the present invention includes an organic solvent.

Various organic solvents typically used in a lithium electrolyte may be used as the organic solvent without limitation. For example, the organic solvent may be a cyclic carbonate-based solvent, a linear carbonate-based solvent, a linear ester-based solvent, a cyclic ester-based solvent, a nitrile-based solvent, or a mixture thereof, and may preferably include a mixture of a cyclic carbonate-based solvent and a linear carbonate-based solvent.

The cyclic carbonate-based solvent is a highly viscous organic solvent which may well dissociate the lithium salt in the electrolyte due to high permittivity, and may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and may preferably include ethylene carbonate (EC).

In addition, the linear carbonate-based solvent is an organic solvent having low viscosity and low permittivity, and may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and preferably, may include ethyl methyl carbonate (EMC).

In order to prepare an electrolyte having high ionic conductivity, it is desirable to use a mixture of the cyclic carbonate-based solvent and the linear carbonate-based solvent as the organic solvent.

The linear ester-based solvent may be at least one selected from among methyl acetate, ethyl acetate, propyl acetate, methyl propionate, ethyl propionate, propyl propionate, and butyl propionate, and may preferably be methyl propionate, ethyl propionate, or propyl propionate.

The cyclic ester-based solvent may be at least one selected from among γ-butyrolactone, γ-valerolactone, γ-caprolactone, σ-valerolactone, and ε-caprolactone.

The nitrile-based solvent may be at least one selected from among succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

Remainders except for the amounts of the other components except for the organic solvent, for example, the compound represented by Formula 1 above, the additive, and the lithium salt in the total weight of the non-aqueous electrolyte may all be organic solvents unless otherwise stated.

**(4) Lithium Salt**

The non-aqueous electrolyte solution of the present invention includes a lithium salt.

Any lithium salt typically used in an electrolyte solution for a lithium secondary battery may be used as the lithium salt without limitation, and specifically, the lithium salt may include $Li^+$ as a cation, and may include at least one selected from among $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF$-, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may be at least one selected from among $LiPF_6$, $LiClO_4$, $LiBF_4$, $LiN(FSO_2)_2$(LiFSI), LiTFSI, lithium bis(pentafluoroethanesulfonyl)imide (LiBETI), $LiSO_3CF_3$, $LiPO_2F_2$, lithium bis (oxalate) borate (LiBOB) , lithium difluoro(oxalate)borate (LiFOB), lithium difluoro(bisoxalato) phosphate (LiDFOP), lithium tetrafluoro(oxalate) phosphate (LiTFOP), and lithium fluoromalonato(difluoro) borate (LiFMDFB), and may preferably be $LiPF_6$.

In an embodiment of the present invention, a concentration of the lithium salt in the non-aqueous organic solution containing the lithium salt and the organic solvent may be 0.5 M to 4.0 M, preferably, 0.5 M to 3.0 M, and more preferably, 0.8 M to 2.0 M. When the concentration of the lithium salt is within the above range, the effects of improving low-temperature output and cycle characteristics are sufficiently secured, and the viscosity and surface tension are prevented from being excessively increased, thereby obtaining appropriate electrolyte solution wetting.

**Positive Electrode**

The lithium secondary battery according to the present invention includes a positive electrode including a positive

electrode active material containing a lithium composite transition metal oxide including nickel, cobalt, and manganese.

Specifically, the lithium composite transition metal oxide includes nickel of 70 mol% or more, preferably 80 mol% or more, and more preferably 85 mol% or more, based on the total number of moles of the transition metals.

In the case of the lithium composite transition metal oxide including nickel, cobalt, and manganese, there is a limitation that the chemical/electrochemical reaction is accelerated at the interface between the electrode and the electrolyte solution due to an unstable structure, and thus components of the electrolyte solution are important in order to improve the limitation.

In particular, in the case of a high-Ni positive electrode active material, structural collapse occurs easily at a high voltage, and in this process, active material particles are broken and reactive oxygen species are generated, and the decomposition reaction of the electrolyte solution is intensified due to the reaction between the generated reactive oxygen species and the electrolyte solution.

In the case of the lithium secondary battery according to the present invention, as described above, the decomposition reaction of the electrolyte solution generated at the interface with the electrode may be controlled through the non-aqueous electrolyte solution containing the first additive and the second additive, thereby improving the decomposition reaction.

In an embodiment of the present invention, the lithium composite transition metal oxide may be represented by Formula 3 below:

[Formula 3] $Li_{1+x}(Ni_aCo_bMn_cM_d)O_2$

In Formula 3 above,

M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and

x, a, b, c, and d each satisfy $-0.2 \leq x \leq 0.2$, $0.70 \leq a < 1$, $0 < b \leq 0.25$, $0 < c \leq 0.25$, $0 \leq d \leq 0.1$, and $a+b+c+d=1$.

Preferably, a, b, c, and d in Formula 3 above may satisfy $0.80 \leq a < 1$, $0 < b \leq 0.15$, $0 < c \leq 0.15$, and $0 \leq d \leq 0.05$, respectively, more preferably, $0.85 \leq a \leq 0.95$, $0.025 \leq b \leq 0.1$, $0.025 \leq c \leq 0.1$, and $0 \leq d \leq 0.05$, respectively.

In an embodiment of the present invention, M in Formula 3 above may be Al, which is favorable for the stability.

The positive electrode according to the present invention may be prepared by coating a positive electrode collector with a positive electrode slurry containing a positive electrode active material, a binder, a conductive agent, a solvent, etc., and then drying and rolling the coated positive electrode collector.

The positive electrode collector is not particularly limited so long as it has conductivity without causing adverse chemical changes in the battery, and, for example, stainless steel; aluminum; nickel; titanium; sintered carbon; or aluminum or stainless steel of which the surface is treated with carbon, nickel, titanium, silver, or the like may be used.

The positive electrode active material may be included in an amount of 80 wt% to 99 wt%, specifically, 90 wt% to 99 wt% based on the total weight of the solid content in the positive electrode slurry. In this case, when the amount of the positive electrode active material is 80 wt% or less, since energy density is reduced, capacity may be reduced.

The binder is a component that assists in the binding between the active material and the conductive agent and in the binding with the current collector, and may be commonly added in an amount of 1 wt% to 30 wt% based on the total weight of the solid content in the positive electrode slurry. Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

In addition, the conductive agent is a material providing conductivity without causing adverse chemical changes in the battery, and may be added in an amount of 0.5 wt% to 20 wt% based on the total weight of the solid content in the positive electrode slurry.

For example, the conductive agent may be selected from among carbon black such as acetylene black, Ketjen black, channel black, furnace black, lamp black, or thermal black; graphite powder such as natural graphite, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; a conductive material such as polyphenylene derivatives; or a combination thereof.

Furthermore, the solvent of the positive electrode slurry may include an organic solvent, such as N-methyl-2-pyrrolidone (NMP), and may be used in an amount such that desirable viscosity is obtained when the positive electrode active material, the binder, and the conductive agent are included. For example, the solvent may be included in an amount such that a concentration of the solid content in the positive electrode slurry containing the positive electrode active material, the binder, and the conductive agent is 40 wt% to 90 wt%, preferably, 50 wt% to 80 wt%.

## Negative Electrode

The lithium secondary battery according to the present invention includes a negative electrode including a negative electrode active material, and the negative electrode may be prepared by coating a negative electrode collector with a negative electrode slurry including the negative electrode active material, a binder, a conductive agent, a solvent, etc., and then drying and rolling the coated negative electrode collector.

The negative electrode collector generally has a thickness of 3 $\mu$m to 500 $\mu$m. The negative electrode collector is not particularly limited so long as it has high conductivity without causing adverse chemical changes in the battery, and, for example, copper; stainless steel; aluminum; nickel; titanium; sintered carbon; copper or stainless steel of which the surface is treated with carbon, nickel, titanium, silver, or the like; or an aluminum-cadmium alloy may be used. Also, like the positive electrode collector, the negative electrode collector may have fine surface roughness to improve binding strength with the negative electrode active material, and the negative electrode collector may be used in various shapes such as a film, a sheet, a foil, a net, a porous body, a foam body, and a non-woven fabric body.

In an embodiment of the present invention, the negative electrode active material may include a silicon-based material.

The silicon-based material is at least one selected from among Si, $SiO_x$ ($0<x<2$), and a Si-Y alloy (Y is an element selected from among an alkali metal, an alkaline earth metal, a Group 13 element, a Group 14 element, a transition metal, a rare earth element, and a combination thereof, and cannot be Si), and preferably Si. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof. Si has an advantage of having a theoretical capacity higher than $SiO_x$.

The capacity of the silicon-based negative electrode active material is about 10 times higher than that of graphite, and thus mass loading ($mg \cdot cm^{-2}$) is lowered, thereby improving fast charging performance of the battery. However, there is a limitation in that the lithium ion loss rate due to the irreversible reaction is high and the volume change is large, thereby adversely affecting the life, and this limitation may be solved by applying the above-described non-aqueous electrolyte solution. Specifically, in the case of the negative electrode containing a silicon-based negative electrode active material, particularly, the negative electrode containing 100% of Si, there is a limitation in that the SEI film is easily broken and regenerated, which occurs continuously, due to large changes in volume during a charging and discharging process as compared with a negative electrode containing a carbon-based negative electrode active material. If the non-aqueous electrolyte solution according to the present invention is applied, the SEI film can be strengthened as described above, thereby effectively solving such a limitation.

In an embodiment of the present invention, the silicon-based material may be 70 wt% to 100 wt%, preferably, 80 wt% to 100 wt% based on the total weight of the negative electrode active material, and more preferably, the negative electrode active material may be made from a silicon-based material. When the silicon-based material is included in the above range, there are effects of increasing the capacity of the negative electrode and improving the fast charging performance.

In addition, in a preferred embodiment, the negative electrode active material may be made from only Si, that is, pure Si.

Furthermore, the negative electrode active material may include at least one selected from a carbon material capable of reversibly intercalating/deintercalating lithium ions; metal or an alloy of lithium and the metal; a metal composite oxide; a material which may be undoped and doped with lithium; lithium metal; and a transition metal oxide, in addition to the silicon-based material.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may include graphite such as irregular, planar, flaky, spherical, or fibrous natural graphite or artificial graphite, and examples of the amorphous carbon may include soft carbon (low-temperature sintered carbon), hard carbon, mesophase pitch carbide, or sintered cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0\leq x\leq 1$), $Li_xWO_2$ ($0\leq x\leq 1$), and $Sn_xMe_{1-x}Me'_yO_z$ (where, Me is Mn, Fe, Pb, or Ge; Me' is Al, B, P, Si, Groups I, II and III elements of the periodic table, or halogen; $0<x\leq 1$; $1\leq y\leq 3$; and $1\leq z\leq 8$) may be used as the metal composite oxide.

The material which may be doped and undoped with lithium may include Sn, $SnO_2$, Sn-Y' (wherein Y' above is an element selected from the group consisting of an alkali metal, an alkaline earth metal, a Group 13 element, a Group 14

element, a transition metal, a rare earth element, and a combination thereof, and is not Sn), or the like. The element Y' may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Si, In, Ge, P, As, Sb, Bi, S, Se, Te, Po, and a combination thereof.

Examples of the transition metal oxide may include lithium-containing titanium composite oxide (LTO), vanadium oxide, lithium vanadium oxide, or the like.

The negative electrode active material may be included in an amount of 60 wt% to 99 wt% based on the total weight of the solid content in the negative electrode slurry.

The binder is a component that assists in the binding between the conductive agent, the active material, and the current collector, wherein the binder may commonly be added in an amount of 1 wt% to 30 wt% based on the total weight of the solid content in the negative electrode slurry. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, various copolymers thereof, or the like.

The conductive agent is a component for further improving the conductivity of the negative electrode active material, and may be added in an amount of 0.5 wt% to 20 wt% based on the total weight of the solid content in the negative electrode slurry. Any conductive agent may be used without particular limitation so long as it has conductivity without causing adverse chemical changes in the battery, and, for example, carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; a conductive material such as polyphenylene derivatives; or a combination thereof may be used.

The solvent of the negative electrode slurry may include water; or an organic solvent such as NMP or alcohol, and may be used in an amount such that desirable viscosity is obtained when the negative electrode active material, the binder, and the conductive agent are included. For example, the solvent may be included in an amount such that a concentration of the solid content in the negative electrode slurry including the negative electrode active material, the binder, and the conductive agent is in a range of 30 wt% to 80 wt%, preferably, 40 wt% to 70 wt%.

## Separator

The lithium secondary battery according to the present invention includes a separator between the positive electrode and the negative electrode.

The separator separates the negative electrode and the positive electrode and provides a movement path of lithium ions, and any separator may be used as the separator without particular limitation as long as it is typically used in a lithium secondary battery, and particularly, a separator having excellent wettability of the electrolyte and excellent stability as well as low resistance to the transfer of electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be used.

The lithium secondary battery according to the present invention as described above may be useful for portable devices, such as mobile phones, notebook computers, and digital cameras, electric cars such as hybrid electric vehicles (HEVs), and the like.

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); and a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be preferably used as a unit cell in a medium-and-large-sized battery module including a plurality of battery cells.

Hereinafter, the present invention will be described in detail with reference to specific examples.

## MODE FOR CARRYING OUT THE INVENTION

### <Examples>

### Example 1.

(Preparation of Non-aqueous Electrolyte)

A non-aqueous organic solution was prepared by mixing ethylene carbonate (EC) and ethyl methyl carbonate (EMC) in a volume ratio of 30:70 and then dissolving $LiPF_6$ in the mixture so as for the $LiPF_6$ to have a concentration of 1.0 M. A non-aqueous electrolyte solution (100 wt%) was prepared by mixing 0.5 wt% of $LiSO_3CF_3$, 0.3 wt% of the compound represented by Formula 2A above, 0.5 wt% of vinylene carbonate (VC), and the balance of the non-aqueous organic solution.

(Manufacture of Lithium Secondary Battery)

$LiNi_{0.86}Co_{0.05}Mn_{0.07}Al_{0.02}O_2$ as a positive electrode active material, a conductive agent (carbon black), and a binder (polyvinylidene fluoride) were added in a weight ratio of 97.6:0.8:1.6 into N-methyl-2-pyrrolidone (NMP), thereby preparing a positive electrode slurry (solid content: 60 wt%). A 13.5 μm thick aluminum (Al) thin film, as a positive electrode collector, was coated with the positive electrode slurry, dried, and then roll-pressed, thereby preparing a positive electrode.

A negative electrode active material (100 wt% of Si), a conductive agent (super-C), and a binder (styrene-butadiene rubber) were added in a weight ratio of 70:20:10 into water, as a solvent, thereby preparing a negative electrode slurry (solid content: 60 wt%). A 6 μm-thick copper (Cu) thin film, as a negative electrode collector, was coated with the negative electrode slurry, dried, and then roll-pressed, thereby preparing a negative electrode.

An electrode assembly was prepared by sequentially stacking the positive electrode, a polyolefin-based porous separator coated with inorganic particles ($Al_2O_3$), and the negative electrode.

The electrode assembly was accommodated in a pouch-type battery case, and the prepared non-aqueous electrolyte was injected thereinto, thereby manufacturing a lithium secondary battery.

### Example 2.

A lithium secondary battery was manufactured in the same manner as in Example 1, except that the content of $LiSO_3CF_3$ was changed to 3 wt% during the preparation of the non-aqueous electrolyte solution.

### Example 3.

A lithium secondary battery was manufactured in the same manner as in Example 1, except that $LiSO_3C_4F_9$ was used instead of $LiSO_3CF_3$ during the preparation of the non-aqueous electrolyte solution.

### Example 4.

A lithium secondary battery was manufactured in the same manner as in Example 2, except that $LiSO_3C_4F_9$ was used instead of $LiSO_3CF_3$ during the preparation of the non-aqueous electrolyte solution.

### Comparative Example 1.

A lithium secondary battery was manufactured in the same manner as in Example 1, except that $LiSO_3CF_3$ was not added and $LiCoO_2$ was used instead of $LiNi_{0.86}Co_{0.05}Mn_{0.07}Al_{0.02}O_2$ as a positive electrode active material during the preparation of the non-aqueous electrolyte solution.

### Comparative Example 2.

A lithium secondary battery was manufactured in the same manner as in Example 1, except that $LiSO_3CF_3$ was not added during the preparation of the non-aqueous electrolyte solution.

### Comparative Example 3.

A lithium secondary battery was prepared in the same manner as in Example 1, except that the compound

represented by Formula 2A was not added during the preparation of the non-aqueous electrolyte solution.

**Comparative Example 4.**

A lithium secondary battery was prepared in the same manner as in Example 3, except that the compound represented by Formula 2A was not added during the preparation of the non-aqueous electrolyte solution.

**<Experimental Examples>**

**Experimental Example 1: Evaluation of High-temperature**

**(45°C) Life Characteristics**

After each of the lithium secondary batteries manufactured in Examples and Comparative Examples was activated at a CC of 0.1 C, degassing was performed.

Thereafter, each secondary battery was charged at a CC of 0.33 C to 3.6 V under a constant current-constant voltage (CC-CV) condition at 25 °C, then subjected to 0.05 C current cut-off, and discharged at a CC of 0.33 C to 2.5 V. Next, each secondary battery was charged at a CC of 0.33 C to 3.6 V under a constant current-constant voltage (CC-CV) condition at 45 °C, then subjected to 0.05 C current cut-off, and discharged at a CC of 0.33 C to 2.5 V.

The above charge and discharge were set as one cycle, and charge and discharge were performed at a high temperature (45 °C), and discharge capacity and resistance were measured after each of 1 cycle and 300 cycles using charge/discharge equipment (5 V, 6 A).

The measured discharge capacity and resistance were put into Equation 1 and Equation 2 below, respectively, thereby calculating capacity retention and resistance increase rate, and the results thereof are listed in Table 1 below.

A volume increase rate was calculated by putting, into Equation 3 below, volumes measured by a buoyancy method after 1 cycle and 300 cycles.

Capacity retention (%) = (discharge capacity after 300 cycles/discharge capacity after 1 cycle) × 100 [Equation 1]

Resistance increase rate (%) = {(resistance after 300 cycles - resistance after 1 cycle)/resistance after 1 cycle} × 100 [Equation 2]

Volume increase rate (%) = { (volume after 300 cycles - volume after 1 cycle)/volume after 1 cycle} × 100 [Equation 3]

[Table 1]

| | Positive Electrode Active Material | First additive | | Second additive | Experimental Example 1 | | |
|---|---|---|---|---|---|---|---|
| | | R in Formula 1 | Content (wt% ) | Content of Formula 2A (wt%) | Capacity retention (%) | Resistance increase rate (%) | Volume increase rate (%) |
| Example 1 | NCMA | $CF_3$ | 0.5 | 0.3 | 95.50 | 3.30 | 2.80 |
| Example 2 | NCMA | $CF_3$ | 3 | 0.3 | 97.10 | 1.20 | 1.90 |
| Example 3 | NCMA | $C_4F_9$ | 0.5 | 0.3 | 96.20 | 1.90 | 2.30 |
| Example 4 | NCMA | $C_4F_9$ | 3 | 0.3 | 95.80 | 2.20 | 2.70 |
| Comparative Example 1 | LCO | - | - | 0.3 | 82.50 | 15.40 | 14.50 |
| Comparative Example 2 | NCMA | - | - | 0.3 | 83.40 | 10.30 | 12.10 |
| Comparative Example 3 | NCMA | $CF_3$ | 0.5 | - | 81.24 | 17.65 | 20.57 |
| Comparative Example 4 | NCMA | $C_4F_9$ | 0.5 | - | 82.36 | 16.55 | 18.65 |

From the results of Table 1 above, it may be confirmed that the batteries of Examples 1 to 4 using the electrolyte

solution containing both the first additive represented by Formula 1 and the second additive represented by Formula 2-1 exhibit excellent performance in which the capacity retention rate at high temperatures is 95% or more, and both the resistance increase rate and the volume increase rate are 5% or less even though the batteries include a high-nickel positive electrode active material and a Si negative electrode. On the other hand, it may be confirmed that the batteries of Comparative Examples 1 and 2 using the electrolyte solution without containing the first additive and the batteries of Comparative Examples 3 and 4 using the electrolyte solution without containing the second additive have a significant deterioration in all of capacity retention, resistance increase rate, and volume increase rate as compared with the batteries of Examples 1 to 4.

That is, it may be seen that when both the first additive and the second additive are included, there is a great effect on improving the high-temperature performance of the lithium secondary battery.

**Experimental Example 2: Evaluation of Fast Charging Performance**

After a lithium secondary battery having a state of charge (SOC) of 8% in each of the lithium secondary batteries manufactured in the Examples and Comparative Examples was prepared, charging was performed at 25 °C while changing C-rate according to the SOC state as shown in Table 2 below, and voltage profiles were determined by checking voltage values at 1 second intervals for each charging section.

[Table 2]

| | Charging Time (sec) | C-rate (C) |
|---|---|---|
| SOC 8%-61% | 880 | 2.5 |
| SOC 62%-80% | 620 | 1 |

Thereafter, the amount of charge when each battery was charged in the CC mode by setting an end condition with the voltage value for each section obtained in each section was recorded. Then, each battery was discharged to a SOC of 8% at 0.5 C in the CC mode again. The charging and discharging was set as 1 cycle, 300 cycles were performed, and then the capacity retention, the resistance increase rate, and the volume increase rate were calculated in the same manner as in Experimental Example 1 above, and the results are listed in Table 3 below.

[Table 3]

| | Posi tive Elec trod e Acti ve Mate rial | First additive | | Second additiv e | Experimental Example 2 | | |
|---|---|---|---|---|---|---|---|
| | | R in Form ula 1 | Cont ent (wt% ) | Content of Formula 2A (wt%) | Capac ity reten tion (%) | Resis tance incre ase rate (%) | Volum e incre ase rate (%) |
| Example 1 | NCMA | $CF_3$ | 0.5 | 0.3 | 91.20 | 5.20 | 5.50 |
| Example 2 | NCMA | $CF_3$ | 3 | 0.3 | 94.20 | 3.50 | 3.40 |
| Example 3 | NCMA | $C_4F_9$ | 0.5 | 0.3 | 93.60 | 4.80 | 4.80 |
| Example 4 | NCMA | $C_4F_9$ | 3 | 0.3 | 92.40 | 5.10 | 5.30 |
| Comparative Example 1 | LCO | - | - | 0.3 | 75.40 | 20.40 | 25.40 |
| Comparative Example 2 | NCMA | - | - | 0.3 | 79.20 | 18.90 | 23.10 |
| Comparative Example 3 | NCMA | $CF_3$ | 0.5 | - | 70.65 | 26.75 | 30.11 |
| Comparative Example 4 | NCMA | $C_4F_9$ | 0.5 | - | 72.43 | 24.12 | 27.45 |

From the results of Table 3 above, it may be confirmed that the batteries of Examples 1 to 4 using the electrolyte solution containing both the first additive represented by Formula 1 and the second additive represented by Formula 2-1 have also excellent performance in the quick charging condition even though the batteries include a high-nickel positive electrode active material and a Si negative electrode, as compared with the batteries of Comparative Examples 1 to 4.

On the other hand, it may be confirmed that the batteries of Comparative Examples 1 and 2 using the electrolyte solution without containing the first additive and the batteries of Comparative Examples 3 and 4 using the electrolyte solution without containing the second additive have a significant decrease in all of capacity retention, resistance increase

rate, and volume increase rate as compared with the batteries of Examples 1 to 4.

Thus, it is confirmed that only the case of containing both the first additive and the second additive can achieve the effect of the present invention.

## Claims

1. A lithium secondary battery comprising:

a non-aqueous electrolyte solution containing a lithium salt, an organic solvent, a first additive represented by Formula 1, and a second additive represented by Formula 2-1;
a positive electrode comprising a positive electrode active material containing a lithium composite transition metal oxide comprising nickel, cobalt, and manganese;
a negative electrode comprising a negative electrode active material; and
a separator interposed between the positive electrode and the negative electrode,
wherein a content of the first additive is 0.5 wt% to 3 wt% based on a total weight of the non-aqueous electrolyte solution, and
the lithium composite transition metal oxide contains 70 mol% or more of nickel based on a total number of moles of transition metals:

[Formula 1] $LiSO_3R$

in Formula 1,
R is $C_nF_{2n+1}$, and n is an integer of 1 to 5, and
[Formula 2-1] has the following structure:

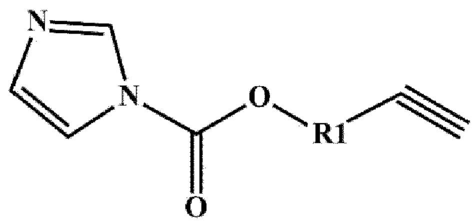

.

in Formula 2-1,
R1 is an alkylene group having 1 to 3 carbon atoms.

2. The lithium secondary battery of claim 1, wherein the non-aqueous electrolyte solution further comprises at least one third additive selected from among vinylene carbonate and vinyl ethylene carbonate.

3. The lithium secondary battery of claim 1, wherein a content of the second additive is 0.01 wt% to 2 wt% based on a total weight of the non-aqueous electrolyte solution.

4. The lithium secondary battery of claim 1, wherein the organic solvent comprises a mixture of a cyclic carbonate-based solvent and a linear carbonate-based solvent.

5. The lithium secondary battery of claim 1, wherein the lithium composite transition metal oxide is represented by Formula 3:

[Formula 3] $Li_{1+x}(Ni_aCo_bMn_cM_d)O_2$

in Formula 3,

M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, a, b, c, and d each satisfy $-0.2 \leq x \leq 0.2$, $0.70 \leq a < 1$, $0 < b \leq 0.25$, $0 < c \leq 0.25$, $0 \leq d \leq 0.1$, and $a+b+c+d=1$.

6. The lithium secondary battery of claim 5, wherein a, b, c, and d in Formula 3 satisfy $0.80 \leq a < 1$, $0 < b \leq 0.15$, $0 < c \leq 0.15$,

and 0≤d≤0.05, respectively.

7. The lithium secondary battery of claim 1, wherein the negative electrode active material comprises a silicon-based material.

## Patentansprüche

1. Lithium-Sekundärbatterie umfassend:

eine nichtwässrige Elektrolytlösung, die ein Lithiumsalz, ein organisches Lösungsmittel, einen ersten Zusatzstoff mit der Formel 1 und einen zweiten Zusatzstoff mit der Formel 2-1 enthält;
eine positive Elektrode umfassend ein Positivelektrodenaktivmaterial, das ein Lithium-Verbund-Übergangsmetalloxid, das Nickel, Kobalt und Mangan umfasst, enthält;
eine negative Elektrode, die ein Negativelektrodenaktivmaterial umfasst; und
einen Separator, der zwischen der positiven Elektrode und der negativen Elektrode angeordnet ist,
wobei der Gehalt des ersten Zusatzstoffs 0,5 Gew.-% bis 3 Gew.-%, bezogen auf das Gesamtgewicht der nichtwässrigen Elektrolytlösung, beträgt, und
das Lithium-Verbund-Übergangsmetalloxid 70 Mol-% oder mehr Nickel, bezogen auf die Gesamtmolzahl der Übergangsmetalle, enthält:

[Formel 1] $LiSO_3R$

worin, in Formel 1,
R ist $C_nF_{2n+1}$ und n ist eine ganze Zahl von 1 bis 5, und
[Formel 2-1] hat die folgende Struktur:

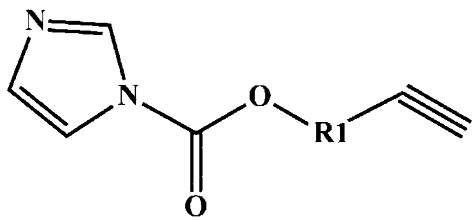

worin, in Formel 2-1,
R1 ist eine Alkylengruppe mit 1 bis 3 Kohlenstoffatomen.

2. Lithium-Sekundärbatterie nach Anspruch 1, wobei die nichtwässrige Elektrolytlösung ferner mindestens einen dritten Zusatzstoff umfasst, ausgewählt aus Vinylencarbonat und Vinylethylencarbonat.

3. Lithium-Sekundärbatterie nach Anspruch 1, wobei der Gehalt des zweiten Zusatzstoffs 0,01 Gew.-% bis 2 Gew.-%, bezogen auf das Gesamtgewicht der nichtwässrigen Elektrolytlösung, beträgt.

4. Lithium-Sekundärbatterie nach Anspruch 1, wobei das organische Lösungsmittel eine Mischung aus einem Lösungsmittel auf Basis eines cyclischen Carbonats und einem Lösungsmittel auf Basis eines linearen Carbonats umfasst.

5. Lithium-Sekundärbatterie nach Anspruch 1, wobei das Lithium-Verbund-Übergangsmetalloxid durch die Formel 3 dargestellt ist:

[Formel 3] $Li_{1+x}(Ni_aCo_bMn_cM_d)O_2$

worin, in Formel 3,

M mindestens ein Element ist, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
x, a, b, c und d erfüllen jeweils -0,2≤x≤0,2, 0,70≤a<1, 0<b≤0,25, 0<c≤0,25, 0≤d≤0,1 und a+b+c+d = 1.

6. Lithium-Sekundärbatterie nach Anspruch 5, wobei a, b, c und d in Formel 3 jeweils $0,80 \leq a < 1$, $0 < b \leq 0,15$, $0 < c \leq 0,15$ und $0 \leq d \leq 0,05$ erfüllen.

7. Lithium-Sekundärbatterie nach Anspruch 1, wobei das Negativelektrodenaktivmaterial ein Material auf Siliziumbasis umfasst.

**Revendications**

1. Batterie secondaire au lithium comprenant :

une solution électrolytique non aqueuse contenant un sel de lithium, un solvant organique, un premier additif représenté par la Formule 1, et un second additif représenté par la Formule 2-1 ;
une électrode positive comprenant un matériau actif d'électrode positive contenant un oxyde de métal de transition composite au lithium comprenant du nickel, du cobalt, et du manganèse ;
une électrode négative comprenant un matériau actif d'électrode négative ; et
un séparateur interposé entre l'électrode positive et l'électrode négative,
dans laquelle une teneur du premier additif va de 0,5 % en poids à 3 % en poids sur la base d'un poids total de la solution électrolytique non aqueuse, et
l'oxyde de métal de transition composite au lithium contient 70 % en moles ou plus de nickel sur la base d'un nombre total de moles de métaux de transition :

[Formule 1] $LiSO_3R$

dans la Formule 1,
R est $C_nF_{2n+1}$, et n est un nombre entier de 1 à 5, et
[Formule 2-1] présente la structure suivante :

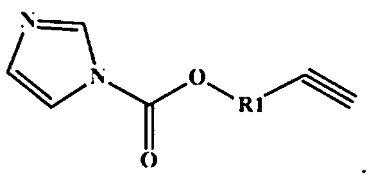

dans la Formule 2-1,
R1 est un groupe alkylène présentant 1 à 3 atomes de carbone.

2. Batterie secondaire au lithium selon la revendication 1, dans laquelle la solution électrolytique non aqueuse comprend en outre au moins un troisième additif sélectionné parmi le carbonate de vinylène et le carbonate d'éthylène vinylique.

3. Batterie secondaire au lithium selon la revendication 1, dans laquelle une teneur du second additif va de 0,01 % en poids à 2 % en poids sur la base d'un poids total de la solution électrolytique non aqueuse.

4. Batterie secondaire au lithium selon la revendication 1, dans laquelle le solvant organique comprend un mélange d'un solvant à base de carbonate cyclique et d'un solvant à base de carbonate linéaire.

5. Batterie secondaire au lithium selon la revendication 1, dans laquelle l'oxyde de métal de transition composite au lithium est représenté par la Formule 3 :

[Formule 3] $Li_{1+x}(Ni_aCo_bMn_cM_d)O_2$

dans la Formule 3,

M est au moins un élément sélectionné parmi le groupe consistant en W, Cu, Fe, V, Cr, Ti, Zr, Zn, Al, In, Ta, Y, La, Sr, Ga, Sc, Gd, Sm, Ca, Ce, Nb, Mg, B, et Mo, et
x, a, b, c, et d satisfont chacun à $-0,2 \leq x \leq 0,2$, $0,70 \leq a < 1$, $0 < b \leq 0,25$, $0 < c \leq 0,25$, $0 \leq d \leq 0,1$, et $a+b+c+d=1$.

**6.** Batterie secondaire au lithium selon la revendication 5, dans laquelle a, b, c, et d dans la Formule 3 satisfont à $0,80 \leq a < 1$, $0 < b \leq 0,15$, $0 < c \leq 0,15$, et $0 \leq d \leq 0,05$, respectivement.

**7.** Batterie secondaire au lithium selon la revendication 1, dans laquelle le matériau actif d'électrode négative comprend un matériau à base de silicium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210154694
- WO 2021034141 A1
- EP 2999033 A1